**Europäisches Patentamt**

(19) **European Patent Office**

**Office européen des brevets**

(11) Veröffentlichungsnummer : **0 152 585
B1**

(12) # EUROPÄISCHE PATENTSCHRIFT

(45) Veröffentlichungstag der Patentschrift :
13.04.88

(21) Anmeldenummer : 84115266.3

(22) Anmeldetag : 12.12.84

(51) Int. Cl.⁴ : **C 08 G 18/48, C 08 G 18/50,
C 08 G 18/64, C 08 G 18/36,
C 09 J 3/16**

(54) **Zweikomponentenpolyurethanklebstoff.**

(30) Priorität : 24.12.83 DE 3347045

(43) Veröffentlichungstag der Anmeldung :
28.08.85 Patentblatt 85/35

(45) Bekanntmachung des Hinweises auf die Patenterteilung : 13.04.88 Patentblatt 88/15

(84) Benannte Vertragsstaaten :
AT BE CH DE FR GB IT LI NL SE

(56) Entgegenhaltungen :
EP-A- 0 125 579
DE-A- 1 645 573
FR-A- 1 281 243
FR-A- 1 423 346
FR-A- 1 434 802
US-A- 4 124 609

(73) Patentinhaber : Henkel Kommanditgesellschaft auf
Aktien
Postfach 1100 Henkelstrasse 67
D-4000 Düsseldorf-Holthausen (DE)

(72) Erfinder : Herold, Julius, Dr.
Marie-Curie-Strasse 2
D-4019 Monheim (DE)
Erfinder : Kluth, Hermann
Degerstrasse 48
D-4000 Düsseldorf (DE)
Erfinder : Meffert, Alfred, Dr.
Marie-Curie-Strasse 10
D-4019 Monheim (DE)
Erfinder : Leder, Manfred, Dr.
Am Eichelkamp 161
D-4010 Hilden (DE)

## Beschreibung

Die Erfindung betrifft einen zweikomponentigen Polyurethanklebstoff, der als Harz ein im wesentlichen aus nachwachsenden, natürlichen Rohstoffen hergestelltes Polyol enthält.

Polyurethanklebstoffe sind seit Jahren bekannt und weit verbreitet. Von besonderer Wichtigkeit, insbesondere bei technischen Anwendungen, sind dabei die Zweikomponentenklebstoffe, die vom Verwender vor Verkleben zu einer Reaktionsmischung verrührt werden, die dann nach Auftragen auf die zu verklebenden Substrate aushärtet. Derartige Zweikomponentenpolyurethanklebstoffe bestehen aus einer Isocyanatkomponente der Funktionalität 2 und höher und einem Harz, insbesondere einem Polyol. Es wurden bereits zahlreiche, mehrfunktionelle Alkohole als Harze für Zweikomponentenpolyurethanklebstoffe vorgeschlagen, unter ihnen als natürliches, nachwachsendes Produkt Rizinusöl. Rizinusöl ist ein Fettsäuretriglycerid, das im Mittel 2,7 sekundäre OH-Gruppen pro Molekül enthält.

Wenngleich Rizinusöl als Harz für Zweikomponentenpolyurethanklebstoffe in den letzten Jahren einige Bedeutung erlangen konnte und insbesondere für flexible, feste Klebstoffe eingesetzt wird, so wird es doch als ein Nachteil empfunden, daß daraus hergestellte Klebstoffe vielfach eine zu kurze Verarbeitungszeit (Topfzeit) aufweisen. Ein weiterer Nachteil liegt darin, von nur einem einzigen Rohstoff abhängig zu sein. Dies gilt in wirtschaftlicher Hinsicht wie insbesondere auch in technischer Hinsicht, d. h. Rizinusöl ist bezüglich der Anzahl von OH-Gruppen nicht variabel oder kann nur durch aufwendige Reaktionen zu Produkten mit beispielsweise höherer OH-Zahl verarbeitet werden.

Außer Rizinusöl sind dem Fachmann auch Polyole bekannt, die durch Ringöffnung oder teilweise Ringöffnung epoxidierter Fettsäuretriglyceride mit Alkoholen hergestellt werden können. So ist in der EP-A 125 529 beschrieben, daß epoxidierte Fettsäuretriglyceride mit kurzkettigen Alkoholen unter teilweise Ringöffnung umgesetzt werden können, wobei Polyole mit einer Funktionalität zwischen 2 und 4 einer Restepoxidzahl von 1,0 bis 4,0 entstehen, die auch zu Polyurethanprepolymeren weiterverarbeitet werden können. Ähnliche Verbindungen werden im französischen Patent 1 434 802 genannt. Aus den beiden zitierten Literaturstellen geht jedoch nicht hervor, daß Ringöffnungsprodukte von Fettsäuretriglyceriden, Fettsäuretrimethylolpropanestern oder Fettsäurepentaerythritestern mit aliphatischen $C_1$ bis $C_{10}$-Alkoholen der Funktionalität 1 besonders günstige Ausgangsstoffe für Klebstoffe darstellen.

Die Erfindung will an diesem Punkt abhelfen. So hat man sich die Aufgabe gestellt, Harze für Zweikomponentenpolyurethanklebstoffe bereitzustellen, die zumindest überwiegend auf nachwachsenden Rohstoffen basieren und eine längere Topfzeit der Klebstoffe gewährleisten.

Eine weitere Aufgabe der Erfindung liegt darin, dem auf diesem Gebiet tätigen Fachmann eine Vielzahl von oleochemischen Polyolen als Harze für Polyurethanklebstoffe zur Verfügung zu stellen. Insbesondere sollen Harze bereitgestellt werden, die gut verfügbar, leicht herstellbar und einfach in ihren Eigenschaften, zum Beispiel in ihrer Hydroxylzahl, variiert werden können.

Gegenstand der Erfindung sind somit Polyurethanklebstoffzubereitungen bestehend aus

A) einer Isocyanatverbindung der Funktionalität 2 bis 10 und

B) einem im wesentlichen wasserfreien Polyol als Harz,

wobei A) und B) bis zur Verwendung getrennt gelagert werden können und zumindest eine der Komponenten Lösungsmittel, Beschleuniger, Füllstoffe oder Hilfsstoffe enthalten kann, dadurch gekennzeichnet, daß das Harz ein Alkoholgemisch aus wasserfreien Polyolen mit mehr als 10 C-Atomen und 2 oder mehr Hydroxylgruppen und einer OH-Zahl zwischen 150 und 210 darstellt, welches durch Umsetzung von epoxidierten Fettsäuretriglyceriden, Fettsäuretrimethylolpropanestern und/oder Fettsäurepentaerythritestern mit aliphatischen $C_1$ bis $C_8$ Alkoholen der Funktionalität 1 im Verhältnis 1 : 1 bis 1 : 10 unter Epoxidringöffnung und gewünschtenfalls Umesterung der Fettsäureester und/oder nachfolgender Reaktion mit $C_2$ bis $C_4$ Epoxiden hergestellt worden ist und A und B in solchen Mengen eingesetzt werden, daß eine Äquivalenz an Isocyanat- und OH-Gruppen vorliegt.

Eine bevorzugte Gruppe von Harzen für Zweikomponentenpolyurethanklebstoffe im Sinne der Erfindung sind die Ringöffnungsprodukte epoxydierter Fettsäuretriglyceride, Fettsäuretrimethylolpropanester und/oder Fettsäurepentaerythritester mit aliphatischen Alkoholen der Funktionalität 1. Eine besonders wichtige Untergruppe dieser Verbindungen sind die Ringöffnungsprodukte epoxydierter Triglyceride, also epoxydierter Fettsäureglycerinester, bei denen die Ringöffnung unter Erhalt der Esterbindung ausgeführt worden ist. Derartige Verbindungen sind besonders leicht zugänglich und in großer Variationsbreite herstellbar. Zur Herstellung der Ringöffnungsprodukte kann man von einer Vielzahl epoxydierter Triglyceride pflanzlichen oder tierischen Ursprungs ausgehen. Voraussetzung ist lediglich, daß ein substantieller Anteil an Epoxidgruppen vorhanden ist. So sind beispielsweise epoxydierte Triglyceride geeignet, die 2 bis 10 Gewichtsprozent Epoxidsauerstoff aufweisen. Für manche Einsatzzwecke besonders geeignet sind hier Produkte mit einem Epoxidsauerstoffgehalt von 3 bis 5. Dieser kann eingestellt werden, indem von Triglyceriden mit relativ niederer Jodzahl ausgegangen wird und diese erschöpfend epoxydiert werden oder indem von Triglyceriden mit hoher Jodzahl ausgegangen wird und nur teilweise Umsetzung zu Epoxiden erfolgt. Eine weitere, für andere Einsatzzwecke geeignete Produktgruppe geht von epoxydierten Triglyceriden mit Epoxidsauerstoffgehalt von 4 bis 8,5 % aus. Derartige Produkte sind herstellbar aus den folgenden Fetten, Ölen (geord net nach steigender Ausgangsjodzahl) : Rindertalg, Palmöl, Schmalz, Rizinusöl, Ernußöl, Rüböl, sowie bevorzugt Baumwollsaatöl, Sojabohnenöl, Tranöl, Sonnenblumenöl, Leinöl. Besonders bevorzugte Rohstoffe sind epoxydiertes Sojabohnenöl mit Epoxidzahl 5,8 bis 6,5, epoxydiertes Sonnenblumenöl mit Epoxidzahl 5,6 bis 6,6, epoxydiertes Leinöl mit Epoxidzahl 8,2 bis 8,6, sowie epoxydiertes Tranöl mit Epoxidzahl 6,3 bis 6,7.

Zur Darstellung erfindungsgemäß geeigneter Harze können die epoxydierten Triglyceride der vollständigen Ringöffnung mit monofunktionellen Alkoholen oder auch der teilweisen Ringöffnung unterzogen werden. Bei der teilweisen Ringöffnung entstehen modifizierte Triglyceride mit im Mittel Expoxid- und Hydroxyl- sowie Ethergruppen. Die Herstellung derartiger Produkte ist Gegenstand der älteren europäischen Patentanmeldung EP-A-111 626. Danach werden Triglyceride eines wenigstens anteilsweise olefinisch ungesättigte Fettsäuren enthaltenden Fettsäuregemisches mit ein- oder mehrwertigen Alkoholen in Gegenwart von Katalysatoren zur Herstellung von Triglyceridreaktionsprodukten der partiellen Ringöffnung unterworfen, indem die Reaktion durch Zerstören oder Entfernen des Katalysators und/oder des Alkoholreaktanten nach einem Umsatz von 20 bis 80 mol-%, bezogen auf Epoxidgruppen abgebrochen wird.

Die vollständige oder teilweise Ringöffnung der epoxydierten Triglyceride mit Hydroxyverbindungen der Funktionalität 1 kann nach dem bei den epoxydierten Fettalkoholen bekannten Verfahren durchgeführt werden. Es sind auch die bereits dort beschriebenen Hydroxyverbindungen geeignet. Bevorzugt können als Harze eingesetzt werden Ringöffnungsprodukte epoxydierter Triglyceride mit Methanol, Ethanol, Propanol, Isopropanol, Butanol, Hexanol, 2-Ethylhexanol, Cyclohexanol.

Ein ganz besonders bevorzugter Rohstoff ist das Umsetzungsprodukt eines epoxydierten Sojabohnenöls mit Epoxidzahl 5,8 bis 6,5 mit Methanol unter vollständiger Ringöffnung aller Epoxidgruppen. Ein weiterer bevorzugter Rohstoff ist ein solches Umsetzungsprodukt mit einer Restepoxidzahl um 3 % Epoxid-Sauerstoff. Auch das Ringöffnungsprodukt eines Sojaöls mit Epoxidzahl 4,5 bis 5 mit Methanol hat sich bewährt. Auch hier kann gesagt werden, daß besonders geeignete Produkte dann entstehen, wenn die epoxydierten Fettsäuretriglyceride mit C1 bis C8-Alkoholen der Funktionalität 1 umgesetzt werden und wenn das Umsetzungsverhältnis 1 : 1 bis 1 : 10 beträgt.

Nach einer weiteren Ausführungsform der Erfindung können anstelle epoxydierter Fettsäuretriglyceride auch andere epoxydierte Fettsäureester mehrfunktioneller Alkohole eingesetzt werden. So können epoxydierte Fettsäuretrimethylolpropan- oder Pentaerythritester in gleicher Weise eingesetzt werden und zu Teil- oder Vollringöffnungsprodukten mit einem der vorgenannten monofunktionellen Alkohole verarbeiter werden.

Alle bisher erwähnten, als Harze verwendbaren Alkoholgemische können weiterhin noch einer Kettenverlängerungsreaktion unterzogen werden. Zu diesem Zweck werden sie unter an sich bekannten Bedingungen mit $C_2$ bis $C_4$-Epoxiden umgesetzt. Bevorzugt ist hier die Umsetzung mit Ethylenoxid. Die Alkoholgemische können pro mol OH-Gruppen mit 1 bis 40 mol Ethylenoxid umgesetzt werden. Bevorzugt ist die Umsetzung mit 5 bis 20 mol und insbesondere mit 10 bis 15 mol Ethylenoxid. Außer mit Ethylenoxid kann auch mit Propylenoxid umgesetzt werden, wobei pro mol OH-Gruppe bis zu 40 mol, vorzugsweise jedoch 5 bis 20 mol Propylenoxid eingesetzt werden. Weiterhin kann mit anderen kurzkettigen Epoxiden, etwa mit Glycidol, umgesetzt werden. Schließlich ist Butenoxid ein geeignetes Umsetzungsmittel. Die Umsetzung mit Ethylenoxid und/oder mit Glycidol führt zu einer Hydrophilierung der Härter, was für manchen Einsatzzwecke gewünscht wird.

Die Komponente A der erfindungsgemäßen Polyurethanklebstoffzubereitungen, der Härter, ist eine Isocyanatverbindung der Funktionalität 2-4. Geeignet sind hier sowohl aromatische als auch aliphatische, monocyclische wie polycyclische, mehrfunktionelle Isocyanatverbindungen. So kann nach einer ersten Ausführungsform als aromatische Isocyanatverbindung Toluylendiisocyanat oder Diphenylmethandiisocyanat eingesetzt werden. Besonders geeignet ist technisches Diphenylmethandiisocyanat mit einem Gehalt an höherfunktionellen Diisocyanaten und einer Funktionalität an Isocyanatgruppen größer als 2. Ein weiteres geeignetes aromatisches Diisocyanat ist Xylylendiisocyanat. Darüber hinaus kann eine Vielzahl aliphatischer Isocyanate der Funktionalität 2 und höher eingesetzt werden. Beispiele sind hier Isophorondiisocyanat und Dicyclohexylmethandiisocyanat als cyclische aliphatische Diisocyanate. Weitere Beispiele sind aliphatische, geradkettige Diisocyanate, wie sie durch Phosgenisierung von Diaminen gewonnen werden, zum Beispiel Tetramethylendiisocyanat oder Hexamethylendiisocyanat.

Als Komponente A in den erfindungsgemäßen Zweikomponentenpolyurethanklebstoffen können außer den mehrfunktionellen Isocyanatverbindungen an sich auch Prepolymere eingesetzt werden. Unter Prepolymeren werden hier die Addukte mehrfunktioneller Isocyanate an mehrfunktionelle Alkohole, etwa die Umsetzungsprodukte eines der vorgenannten aromatischen oder aliphatischen Diisocyanate mit Ethylenglykol, Propylenglykol, Glycerin, Trimethylolpropan oder Pentaerythrit verstanden. Auch Umsetzungsprodukte von Diisocyanaten mit Polyetherpolyolen, zum Beispiel Polyetherpolyolen auf Basis Polyethylenoxid oder auf Basis Polypropylenoxid können als Prepolymere verwendet werden.

Die erfindungsgemäßen Zweikomponentenpolyurethanklebstoffzubereitungen können weiterhin verschiedene Hilfsstoffe enthalten, die vorzugsweise dem Harz Polyol zugemischt werden. Verwendet werden können hier zum Beispiel Füllstoffe. Als Füllstoffe geeignet sind gegenüber Isocyanaten nicht reaktive, anorganische Verbindungen wie zum Beispiel Kreide oder Kalkmehl, gefällte Kieselsäuren, Zeolithe, Bentonite, gemahlene Mineralien sowie andere, dem auf dem Arbeitsgebiet tätigen Fachmann bekannte anorganische Füllstoffe. Weiterhin können auch organische Füllstoffe verwendet werden, insbesondere Faserkurzschnitte und anderes. Bevorzugt sind Füllstoffe, die den Klebstofflösungen Thixotropie verleihen.

Die erfindungsgemäßen Zweikomponentenpolyurethanklebstoffe können weiterhin Beschleuniger enthalten. Geeignet sind zum Beispiel tertiäre Basen, wie Bis-(N,N,-dimethylamino)-diethylether, Dimethylaminocyclohexan, N,N-Dimethyl-benzylamin, N-Methylmorpholin sowie die Umsetzungsprodukte von Dialkyl-(ß-hydroxyethyl)-amin mit Monoisocyanaten und Veresterungsprodukte von Dialkyl-(ß-hydroxyethyl)-amin und Dicarbonsäuren. Ein weiterer wichtiger Beschleuniger ist das 1,4-Diamino-bicyclo-(2.2.2)-octan. Ferner können nichtbasische Substanzen als Beschleuniger verwendet werden. Hier seien Metallverbindungen genannt, beispielsweise Eisenpentacarbonyl, Nickeltetracarbonyl, Eisenacetylacetonat sowie Zinn-(II)-(2-ethylhexoat), Dibutylzinndilaurat oder Molybdänglykolat.

Außer den genannten Verbindungen können die erfindungsgemäßen Polyurethanklebstoffe noch weitere Hilfsstoffe enthalten. Zu erwähnen sind hier Lösungsmittel. Geeignet sind Lösungsmittel die ihrerseits nicht mit Isocyanatgruppen reagieren, wie zum Beispiel halogenierte Kohlenwasserstoffe, Ester, Ketone, aromatische Kohlenwasserstoffe und andere. Weiterhin können Weichmacher, Flammschutzmittel, Verzögerer, Farbstoffe und Alterungsschutzmittel wie sie in entsprechenden Klebstoffen bekannt sind, mit eingearbeitet werden.

Die erfindungsgemäßen Zweikomponentenpolyurethanklebstoffe werden bis zu ihrer Anwendung zweikomponentig gelagert, das heißt bis zu diesem Zeitpunkt werden Harze und Isocyanatverbindung (Härter) getrennt aufbewahrt. Zur Anwendung werden diese beiden Verbindungen miteinander vermischt und das Gemisch auf die zu verklebenden Substrate aufgetragen. Bezüglich des Mischungsverhältnisses und von Maßnahmen zur Beeinflussung der Topfzeit sei auf das allgemeine Fachwissen des Klebstoff-Fachmanns verwiesen. Dies ist beispielsweise in der Monographie von Saunders und Frisch « Polyurethanes, Chemistry and Technology », Band XVI der Serie High Polymers « Interscience Publisher » New York - London, Teil I (1962) und Teil II (1964) dokumentiert. Um das richtige Mischungsverhältnis zu finden, wird der Fachmann im allgemeinen eine Äquivalenz an Isocyanat und OH-Gruppen anstreben. Dazu kann in Vorversuchen die OH-Zahl der Alkoholgemische und die Isocyanatzahl der Isocyanatverbindungen bestimmt werden, aus denen sich dann die Anzahl der Mole reaktiver Gruppen pro Gramm errechnen läßt. Besonders geeignete erfindungsgemäße Harze weisen OH-Zahlen zwischen 150 und 210 auf. Je nach chemischer Struktur sind jedoch auch Verbindungen mit geringerer oder höherer OH-Zahl, etwa mit OH-Zahlen zwischen 60 und 120 oder zwischen 240 und 500 geeignet, sofern ihre Funktionalität nicht unter zwei OH-Gruppen pro Molekül liegt.

Die erfindungsgemäßen Polyurethanklebstoffe sind zum Verbinden einer Vielzahl flexibler oder starrer Substrate geeignet. So können Kunststoffe, Metalle oder auch Holz in vielfältiger Weise unter sich oder miteinander verbunden werden. Besonders geeignet sind die Klebstoffe auf all den Einsatzgebieten, auf denen bisher Zweikomponentenpolyurethanklebstoffe auf Basis Rizinusöl eingesetzt worden sind.

## Beispiele

Die folgenden Beispiele zeigen einen Vergleich zwischen zweikomponentigen Polyurethanklebstoffen auf Basis von Rizinusöl (Vergleichsbeispiel) und oleochemischen Polyolen (Beispiel 2 und 3). Die folgenden oleochemischen Polyole wurden eingesetzt :

Beispiel 2 : Ringöffnungsprodukt eines epoxydierten Sojaöls mit Methanol. Ausgangswert 6,1 % Epoxidsauerstoff, Endwert 0 % OH-Zahl 204 und

Rezeptur

32,0 Gew.-% Polyol
65,0 Gew.-% Kreide
2,0 Gew.-% Kieselsäure, gefällt
1,0 Gew.-% Zeolithpulver

Als Härter diente in allen Fällen rohes Diphenylmethandiisocyanat (roh-MDI) im Molverhältnis (OH-Gruppen : NCO-Gruppen) 1 : 1.

Die Ergebnisse der klebstofftechnischen Prüfungen sind in Tabelle 1 aufgelistet.

Tabelle 1

|  | Vergleichs-beispiel 1 | Bei-spiel 2 |
|---|---|---|
| Viskosität des Harzes in mPa.s bei 20 °C | 30.000 | 80.000 |
| Topfzeit/min. | 50 | 130 |
| Shore-D-Härte | 36 | 72 |
| Zugscherfestigkeit an Aluminium (DIN 53 283) in N/mm2 | 11 | 17 |

Es wurden weitere Versuche mit den Teilringöffnungsprodukten von epoxydiertem Sojaöl (Ausgangswert 6,1 Gew.-% Epoxidsauerstoff) mit Methanol durchgeführt. Die Ergebnisse sind in Tabelle 2 aufgelistet.

(Siehe Tabelle 2 Seite 6 f.)

Tabelle 2

| | Eigenschaften der Polyole | | | Eigenschaften von 2K-Polyurethan-Klebstoffen mit MDI (Desmodur 44V10, Bayer) als Härter | | | | | |
| Bei-spiel Nr. | Epoxid-O (%) | OH-Zahl | Visko-sität bei 23 °C mPas | Molver-hältnis OH/NCO | Massenverhält-nis : Polyol : MDI | Shore A Härte DIN 53505 | Scherfestigkeit Holz/Holz b.RT in N/mm² | | |
| | | | | | | | 1 d | 4 d | 7 d |
|---|---|---|---|---|---|---|---|---|---|
| Rizi-nusöl | - | 165 | 745 | 1 : 1 | 100 | 39,9 | 68 | 2,06 | 2,23 | 2,35 |
| 4 | 1,11 | 156 | - | 1 : 1 | 100 | 37,8 | 94 | 3,80 | 4,23 | 4,78 |
| 5 | 0,58 | 172 | 6370 | 1 : 1 | 100 | 41,6 | 96 | 3,08 | 3,99 | 4,58 |

0 152 585

**Patentansprüche**

1. Polyurethanklebstoffzubereitungen bestehend aus
   A) einer Isocyanatverbindung der Funktionalität 2 bis 10 und
   B) einem im wesentlichen wasserfreien Polyol als Harz,
wobei A) und B) bis zur Verwendung getrennt gelagert werden können und zumindest eine der Komponenten Lösungsmittel, Beschleuniger, Füllstoffe oder Hilfsstoffe enthalten kann, dadurch gekennzeichnet, daß das Harz ein Alkoholgemisch aus wasserfreien Polyolen mit mehr als 10 C-Atomen und 2 oder mehr Hydroxylgruppen und einer OH-Zahl zwischen 150 und 210 darstellt, welches durch Umsetzung von epoxidierten Fettsäuretriglyceriden, Fettsäuretrimethylolpropanestern und/oder Fettsäurepentaerythritestern mit aliphatischen $C_1$ bis $C_8$-Alkoholen der Funktionalität 1 im Verhältnis 1 : 1 bis 1 : 10 unter Epoxidringöffnung und gewünschtenfalls Umesterung der Fettsäureester und/oder nachfolgender Reaktion mit $C_2$ bis $C_4$-Epoxiden hergestellt worden ist und A und B in solchen Mengen eingesetzt werden, daß eine Äquivalenz an Isocyanat- und OH-Gruppen vorliegt.

2. Polyurethanklebstoffzubereitungen nach Anspruch 1, dadurch gekennzeichnet, daß das Harz ein Alkoholgemisch aus wasserfreien Polyolen mit mehr als 10 C-Atomen und 2 oder mehr Hydroxylgruppen darstellt, welches durch Umsetzung von epoxidierten Fettsäuretriglyceriden mit aliphatischen $C_1$ bis $C_8$-Alkoholen der Funktionalität 1 unter Epoxidringöffnung und anschließender Reaktion mit Ethylenoxid und/oder Propylenoxid im Molverhältnis 1 : 5 bis 1 : 40, bezogen auf OH-Gruppen hergestellt worden ist.

3. Polyurethanklebstoffzubereitungen nach den Ansprüchen 1 und 2, dadurch gekennzeichnet, daß es sich bei der Komponente A) um aromatische Diisocyanate vorzugsweise um Diphenylmethandiisocyanat und insbesondere technisches Diphenylmethandiisocyanat der Funktionalität größer als 2, oder Toluylendiisocyanat handelt.

4. Polyurethanklebstoffzubereitungen nach den Ansprüchen 1 bis 3, dadurch gekennzeichnet, daß es sich bei der Komponente A) um cycloaliphatische Diisocyanate, insbesondere um Isophorondiisocyanat oder Dicyclohexylmethandiisocyanat handelt.

5. Polyurethanklebstoffzubereitungen nach den Ansprüchen 1 bis 4, dadurch gekennzeichnet, daß es sich bei Komponente A) um Polyurethanprepolymere handelt, insbesondere um Umsetzungsprodukte aromatischer oder cycloaliphatischer Diisocyanate mit Ethylenglycol, Propylenglycol, Glycerin, Trimethylolpropan, Pentaerythrit oder Polyetherpolyolen.

6. Polyurethanklebstoffzubereitungen nach den Ansprüchen 1 bis 5, dadurch gekennzeichnet, daß sie in Abmischung mit dem Harz übliche Füllstoffe wie zum Beispiel Kreide, Kalkmehl, gefällte Kieselsäure, organische Fasern oder Zeolithpulver enthalten.

7. Polyurethanklebstoffzubereitungen nach den Ansprüchen 1 bis 6, dadurch gekennzeichnet, daß sie in Abmischung mit einer der Komponenten Beschleuniger, Alterungsschutzmittel gegenüber Isocyanatgruppen nicht reaktive Lösungsmittel und/oder Verzögerer enthalten.

8. Verwendung von Klebstoffzubereitungen nach den Ansprüchen 1 bis 7 zum Verkleben von starren oder flexiblen Substraten, insbesondere von Kunststoffen, Metallen, Glas oder Holz miteinander oder mit sich selbst.

**Claims**

1. Polyurethane adhesive preparations consisting of
   A) an isocyanate compound having a functionality of from 2 to 10 and
   B) a substantially anhydrous polyol as resin,
A) and B) being separately storable pending use and at least one of the components being able to contain solvents, accelerators, fillers or auxiliaries, characterized in that the resin is an alcohol mixture of anhydrous polyols containing more than 10 carbon atoms and 2 or more hydroxyl groups and having an OH number of from 150 to 210 which has been prepared by reaction of epoxidized fatty acid triglycerides, fatty acid trimethylolpropane esters and/or fatty acid pentaerythritol esters with aliphatic $C_1$-$C_8$ alcohols having a functionality of 1 in a ration of 1 : 1 to 1 : 10 with opening of the epoxide ring and, if desired, transesterification of the fatty acid esters and/or subsequent reaction with $C_2$ to $C_4$ epoxides, and in that A and B are used in such quantities that an equivalence of isocyanate and OH groups is present.

2. Polyurethane adhesive preparations as claimed in Claim 1, characterized in that the resin is an alcohol mixture of anhydrous polyols containing more than 10 carbon atoms and 2 or more hydroxyl groups which has been obtained by reacting epoxidized fatty acid triglycerides with aliphatic $C_1$-$C_8$ alcohols having a functionality of from 1 to 4 with opening of the epoxide ring and subsequent reaction with ethylene oxide and/or propylene oxide in a molar ratio of from 1 : 5 to 1 : 40, based on OH-groups.

3. Polyurethane adhesive preparations as claimed in Claims 1 and 2, characterized in that component A) is an aromatic diisocyanate, preferably diphenylmethane diisocyanate and, more preferably, technical diphenylmethane diisocyanate having a functionality of greater than 2 or tolylene diisocyanate.

4. Polyurethane adhesive preparations as claimed in Claims 1 to 3, characterized in that component A) is an alipathic diisocyanate, more particularly isophorone diisocyanate or dicyclohexylmethane diisocyanate.

**0 152 585**

5. Polyurethane adhesive preparations as claimed in Claims 1 to 4, characterized in that component A) is a polyurethane prepolymer, more especially a reaction product of aromatic or cycloaliphatic diisocyanates with ethylene glycol, propylene glycol, glycerol, trimethylolpropane, pentaerythritol or polyether polyols.

6. Polyurethane adhesive preparations as claimed in Claims 1 to 5, characterized in that they contain, in admixture with the resin, standard fillers such as, for example, chalk, lime powder, precipitated silica, organic fibers or zeolite powders.

7. Polyurethane adhesive preparations as claimed in Claims 1 to 6, characterized in that they contain, in admixture with one of the components, accelerators, antiagers, solvents which are not reactive to isocyanate groups and/or retarders.

8. The use of the adhesive preparations claimed in Claims 1 to 7, for bonding rigid or flexible substrates, more particularly plastics, metals, glass or wood to one another or in combination with one another.

**Revendications**

1. Compositions de substances adhésives du type polyuréthane consistant en :
   A) un composé isocyanique de fonctionnalité 2 à 10, et
   B) un polyol essentiellement anhydre en tant que résine,
pour lesquelles A et B peuvent être stockées jusqu'à l'utilisation, séparément et au moins un des composants peut contenir un solvant, un accélérateur des substances de remplissage, ou des substances auxiliaires, caractérisées en ce que la résine est formée d'un mélange d'alcools à partir de polyols anhydres avec plus de 10 atomes de carbone et deux ou plus groupes hydroxyle et un indice d'hydroxyle entre 150 et 210, lequel mélange est obtenu par condensation de triglycérides d'acides gras époxydés, d'esters de triméthylol propyle d'acides gras et/ou d'esters de pentaérythrityle d'acides gras avec des alcools en $C_1$ à $C_8$ de fonctionnalité 1 en proportions 1 : 1 à 1 : 10, avec ouverture du cycle époxyde et, si désiré, transestérification de l'ester d'acide gras et/ou réaction subséquente avec des époxydes en $C_2$ à $C_4$, et A et B sont mis en œuvre en des quantités telles qu'un équivalent en isocyanate et en groupes hydroxyles est présent.

2. Compositions de substances adhésives du type polyuréthane selon la revendication 1, caractérisées en ce que la résine est formée d'un mélange d'alcools à partir de polyols anhydres ayant plus de 10 atomes de carbone et 2 ou plus groupes hydroxyles, lequel mélange est obtenu par condensation de triglycérides d'acides gras époxydés, avec des alcools aliphatiques en $C_1$ à $C_8$ de fonctionnalité 1 avec ouverture du cycle époxyde et réaction immédiatement après avec l'oxyde d'éthylène et/ou l'oxyde de propylène en proportions molaires de 1 : 5 à 1 : 40 rapportées aux groupes hydroxyle.

3. Compositions de substances adhésives du type polyuréthane selon les revendications 1 et 2, caractérisées en ce qu'il s'agit pour le composant A d'un isocyanate aromatique, de préférence du diphényle méthane diisocyanate et plus particulièrement du diphényle méthane diisocyanate technique de fonctionnalité supérieure à 2, ou bien du toluylène diisocyanate.

4. Compositions de substances adhésives du type polyuréthane selon les revendications 1 à 3, caractérisées en ce que pour le composant A, il s'agit de diisocyanates cycloaliphatiques, en particulier d'isophorone diisocyanate ou de dicyclohexylméthane diisocyanate.

5. Compositions de substances adhésives du type polyuréthane, caractérisées en ce que pour le composant A, il s'agit de prépolymère de polyuréthane, en particulier de produits de condensation de diisocyanates aromatique ou cycloaliphatique avec l'éthylène glycol, le propylène glycol, le glycérol, le triméthylolpropane, le pentaérythritol ou des polyester de polyols.

6. Compositions de substances adhésives du type polyuréthane selon les revendications 1 à 5, caractérisées en ce qu'elles renferment dans le mélange avec la résine des substances de remplissage usuelles comme par exemple la craie, la chaux pulvérisée, la silice précipitée, des fibres organiques ou de la zéolithe en poudre.

7. Compositions de substances adhésives selon les revendications 1 à 6, caractérisées en ce qu'elles renferment en mélange avec un des composants, un accélérateur, un agent de protection contre le vieillissement, un solvant non réactif vis-à-vis des groupes isocyanates et/ou un retardateur.

8. Utilisation des compositions de substances adhésives selon les revendications 1 à 7, pour le collage de substrats rigides ou flexibles, en particulier de matières plastiques, de métaux, de verre ou de bois l'un avec l'autre ou avec eux-mêmes.